# EUROPEAN PATENT APPLICATION

(11) **EP 2 194 269 A1**
(43) Date of publication of application: **09.06.2010**
(21) Application number: 08835294.3
(22) Date of filing: 03.10.2008
(51) Int. Cl.: F03D 11/00

(54) **WIND DRIVEN ELECTRIC POWER GENERATOR**

(30) Priority: 05.10.2007 JP 2007261721
(71) Applicant: Mitsubishi Heavy Industries, Ltd., Tokyo 108-8215 (JP)
(72) Inventor: SATO, Shinsuke, Nagasaki-shi Nagasaki 851-0392 (JP); SATO, Toshihiro, Nagasaki-shi Nagasaki 851-0392 (JP); FUKUDA, Hideo, Takasago-shi, Hyogo 6768686 (JP); KUSHIOKA, Kiyonori, Nagasaki-shi Nagasaki 851-0392 (JP); HIRAI, Shigeto, Nagasaki-shi Nagasaki 851-0392 (JP); SAKATA, Nobuyasu, Nagasaki-shi Nagasaki 851-0392 (JP); SHIRAISHI, Tatsuya, Nagasaki-shi Nagasaki 851-0392 (JP)
(74) Representative: Intes, Didier Gérard André
(86) International application number: PCT/JP2008/068025
(87) International publication number: WO 2009/044843

(57) **Abstract**

The invention provides a wind turbine generating apparatus capable of controlling a temperature in a rotor head. In a wind turbine generating apparatus (1) in which a driving/generating mechanism coupled to a rotor head (4) having wind turbine blades (5) attached thereto is housed in a nacelle (3), and control devices are housed in a hub (7) of the rotor head (4), an air circulation guide (20) is provided for allowing air to circulate between an inside of the rotor head (4) and an inside of the nacelle (3) via a communication path (9) formed between the rotor head (4) and the nacelle (3).

## Description

### Technical Field

The present invention relates to a wind turbine generating apparatus for generating power by using a wind turbine that converts wind as natural energy to a rotational force.

### Background Art

Conventionally, there is known a wind turbine generating apparatus for generating power by using a force of wind as natural energy. In a wind turbine generating apparatus of this kind, a nacelle mounted on a support is provided with a rotor head to which wind turbine blades are attached, a main shaft coupled so as to rotate integrally with the rotor head, a gear box to which the main shaft rotating on receipt of a force of wind by the wind turbine blades is coupled, and a power generator driven by a shaft output of the gear box. In the wind turbine generating apparatus constructed as described above, the rotor head having the wind turbine blades that convert a force of wind to a rotational force and the main shaft rotate to generate a shaft output. The shaft output of which rotational speed is increased via the gear box coupled to the main shaft is transmitted to the power generator. Consequently, there can be performed power generation using the shaft output obtained by converting the force of wind to the rotational speed as a drive source of the power generator and using a force of wind as the power of the power generator.

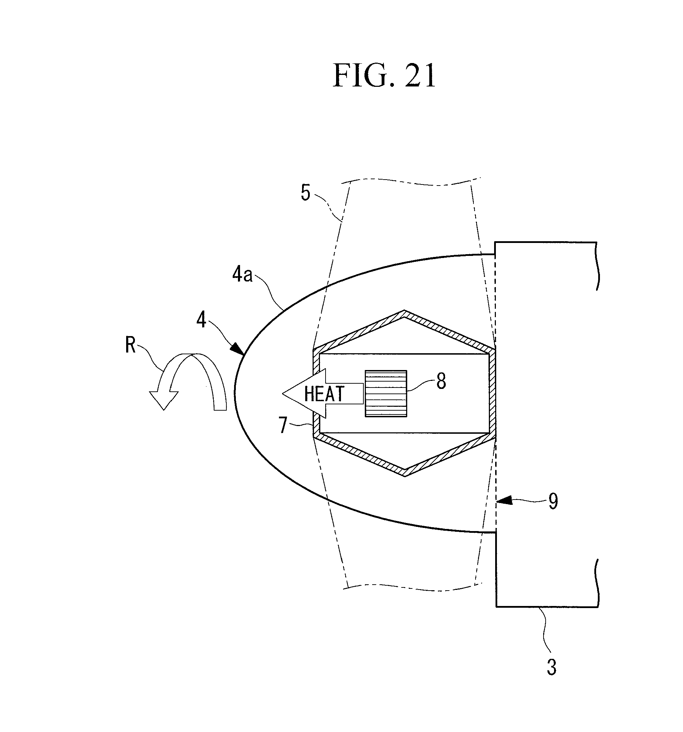

In the above-described conventional wind turbine generating apparatus, as shown in FIG. 21 or the like, an internal device 8 generating heat is housed in a hub 7 of a rotor head 4 on a rotary side with respect to a nacelle 3 on a stationary side. The internal device 8 is, for example, a pitch controller for promptly and precisely changing the blade pitch of wind turbine blades 5 in accordance with fluctuations in wind velocity, and is constructed by drive devices such as a hydraulic pump driven by an electric motor and control devices such as a control panel for performing pitch control. Reference 4a in the diagram denotes a rotor head cover, and the rotor head 4 is configured such that the outside of the hub 7 is covered with the rotor head cover 4a.

On the other hand, also inside the nacelle 3, parts generating heat during operation such as the gear box and the power generator are housed. Therefore, a cooling structure is employed to prevent temperature rise by forming an air inlet and an air exhaust outlet and ventilating the nacelle by using a fan operated by, for example, a wind turbine.
Although the nacelle 3 and the rotor head 4 are spatially connected to each other via a communication path 9 to which, for example, a punching metal or the like is attached, the rotor head 4 side is closed, resulting in hardly any air circulation.

As a conventional technique related to a wind turbine generating apparatus, there is disclosed, for example, a structure in which a cooling device is provided to a switch board mounted in a tower head (refer to, for example, Patent Citation 1).
Patent Citation 1: U. S. Patent application, publication No. 2007/0119185

### Disclosure of Invention

In the above wind turbine generating apparatus, as an output increases in recent years, there is a tendency that the wind turbine blades are also becoming larger. Consequently, it becomes necessary to increase outputs of devices mounted in the hub of the rotor head, so that the heat generation amount of the devices also increases along with increase in the output. Since such increase in the heat generation amount raises the internal temperature of the hub 4, the situation becomes severe for the control devices configured by electric/electronic parts that require control of the temperature of the install environment.
Since there is hardly any circulation of air between the rotor head and the nacelle, there remains most of air of which temperature is raised due to heat generation in the rotor head.
Further, the inside of the rotor head has to be hermetically sealed in order to protect the internal devices from rain water and the like, so that it is hermetically closed except for the communication path. Particularly, hermetic sealing in the hub is demanded as a measure for waterproof of the devices mounted in the hub of the rotor head.

As described above, the inside of the rotor head has to employ a sealed structure allowing heat to remain, so that rise in the internal temperature caused by increase in the heat generation amount of the internal devices becomes significant. Therefore, to make the control devices operate normally so as to continue power generation, sufficient temperature control such as cooling the inside of the rotor head is required. From such a background, as the wind turbine generating apparatus becomes larger, it is an important task to perform the temperature control by cooling the inside of the rotor head to thereby improve reliability and durability of the wind turbine generating apparatus.
The present invention has been achieved in consideration of the above circumstances, and it is an object thereof to provide a wind turbine generating apparatus capable of controlling the temperature in a rotor head.

To achieve the object, the present invention employs the following means.
A wind turbine generating apparatus according to a first mode of the present invention is a wind turbine generating apparatus in which a driving/generating mechanism coupled to a rotor head having wind turbine blades attached thereto is housed in a nacelle, and control devices are housed in a hub of the rotor head, the apparatus comprising an air flow forming means for allowing air to circulate between an inside of the rotor head and an inside of the nacelle via a communication path formed between the rotor head and the nacelle.

According to the first mode of the present invention, the air flow forming means is provided for allowing air to circulate between the inside of the rotor head and the inside of the nacelle via the communication path formed between the rotor head and the nacelle. Consequently, a cooling structure is provided, so that air of a relatively low temperature circulates in the rotor head to decrease the internal temperature.

In the wind turbine generating apparatus according to the first mode, preferably, the air flow forming means is provided as an air circulation guide mounted in the communication path. With the configuration, in the communication path formed between the rotor head on the rotary side and the nacelle on the stationary side, the air circulation guide performs relative rotary motion without requiring any dedicated power, thereby increasing the air circulation amount.
In this case, two or more of the air circulation guides may be attached over a semiperimeter in a circumferential direction of the communication path so as to be fixed on the nacelle side. Alternatively, two or more of the air circulation guides may be attached over a semiperimeter in a circumferential direction of the communication path so as to be fixed on the rotor head side.

In the first mode, preferably, the air flow forming means includes: an air flow path forming member attached to the inside of the rotor head, separating the communication path to an inner peripheral side and an outer peripheral side, separating an internal space of the rotor head to a hub outer peripheral face side and a rotor head inner wall face side, and having an opening for allowing the hub outer peripheral face side and the rotor head inner wall face side to communicate with each other; inner-peripheral-side air circulation guides fixed to the rotor head side and arranged over an entire circumference along the inner peripheral side of the communication path; and outer-peripheral-side air circulation guides fixed to the nacelle side and arranged over an entire circumference along the outer peripheral side of the communication path, wherein air in the nacelle is introduced into the air flow path forming member and circulated therein. With the configuration, in the communication path formed between the rotary head on the rotary side and the nacelle on the stationary side, the air circulation guides can increase the air circulation amount by performing relative rotary motion without requiring any dedicated power. In this case, air in the nacelle of a relatively low temperature is first introduced to the inside of the air flow path forming member (the hub outer peripheral face side) to be circulated, and thereafter, flows from the opening to the outside (the rotor head inner wall face side) to be returned to the nacelle side.

In the first mode, preferably, the air flow forming means is provided as an air flow accelerating member disposed so as to be stationary in a predetermined position in the rotor head. With this configuration, when viewed from the rotating rotor head side, the stationary air flow accelerating member is in a state of relatively rotating without requiring power. As a result, the air flow accelerating member can form a circulation flow of air in the rotor head. It is sufficient to cause the air flow accelerating member to be held stationary in a predetermined position by a propeller-shaped member or a plate-shaped member swingably axially supported by a weight or the like.

In the first mode, preferably, the air flow forming means includes a flow path in a rotor shaft, for allowing the inside of the nacelle and the inside of the hub to communicate with each other, an air blowing means provided in the nacelle, and an outflow hole opened in the hub, and air in the nacelle is circulated by being introduced into the hub to outflow from the outflow hole, and then being returned into the nacelle via the communication path. In such a manner, air of a relatively low temperature in the nacelle is allowed to outflow into the hub to reliably perform ventilation, so that the inside of the hub can be cooled. Further, since air flows out from the outflow hole, invasion of droplets or the like to the inside of the hub is prevented, and an almost air-tight state can be provided.

In the first mode, preferably, the air flow forming means is provided as a fan mounted in the communication path, for operating using rotation on the rotor head side as a driving force. With the configuration, the fan can be operated even with no drive source such as an electric motor, and air of a relatively low temperature in the nacelle can be circulated into the rotor head to perform ventilation.

A wind turbine generating apparatus according to a second mode of the present invention is a wind turbine generating apparatus in which a driving/generating mechanism coupled to a rotor head having wind turbine blades attached thereto is housed in a nacelle, and control devices are housed in a hub of the rotor head, the apparatus comprising: an outside air introducing path allowing an outside of the rotor head and an inside of the hub to communicate with each other and having a louver; and an outside air circulating path is formed where outside air, which is introduced from an inlet of the outside air introducing path into the hub, passes through an outflow hole opened in the hub and a communication path formed between the rotor head and the nacelle, so as to flow to the outside.

According to the second mode of the present invention, the outside air introducing path having a louver is provided for allowing the outside of the rotor head and the inside of the hub to communicate with each other, and the outside air circulating path is provided in which outside air introduced from an inlet of the outside air introducing path into the hub passes through the outflow hole opened in the hub and the communication path formed between the rotor head and the nacelle so as to flow to the outside. Therefore, the inside of the hub is cooled reliably by the outside air, invasion of droplets or the like is prevented by the louver, and an almost air-tight state can be provided.

A wind turbine generating apparatus according to a third mode of the present invention, there is provided a wind turbine generating apparatus in which a driving/generating mechanism coupled to a rotor head having wind turbine blades attached thereto is housed in a nacelle, and control devices are housed in a hub of the rotor head, the apparatus comprising a heat dissipating means is provided to at least one of the rotor head and the hub.

According to the third mode of the present invention, the heat dissipating means is provided to at least one of the rotor head and the hub, so that the heat transfer amount between the outsides and insides of the rotor head and the hub can be increased without deteriorating air-tightness. As the heat dissipating means in this case, a cooling heat transfer element such as a Peltier element, a radiation fin, or the like is effectively employed.

According to the present invention, by introducing air of a relatively low temperature from the inside of the nacelle or introducing outside air directly to the inside of the rotor head and circulating the introduced air, temperature control is performed by cooling the inside of the rotor head, and the operation environment of the control devices is specifically maintained, so that reliability and durability of the wind turbine power generating apparatus can be improved.
Further, by providing at least one of the rotor head and the hub with the heat dissipating means to increase the heat transfer amount, temperature control is performed by cooling the inside of the rotor head, and particularly the operation environment of the control devices is maintained, so that reliability and durability of the wind turbine power generating apparatus can be improved.

### Brief Description of Drawings

[FIG. 1] Diagram showing an embodiment of a wind turbine generating apparatus according to the present invention, in cross section showing a main part of a first embodiment of an air circulation guide.
[FIG. 2] Diagram of the air circulation guide of FIG. 1 viewed from a rotor head side.
[FIG. 3] Perspective view showing a shape of a blade as the air circulation guide.
[FIG. 4] Perspective view showing a curved member as a modification of the air circulation guide.
[FIG. 5] Diagram showing a general configuration example of the wind turbine generating apparatus.
[FIG. 6] Perspective view showing an internal configuration example of a nacelle.
[FIG. 7] Diagram showing another embodiment of a wind turbine generating apparatus according to the present invention, in cross section showing a main part of a second embodiment of an air circulation guide.
[FIG. 8] Diagram of the air circulation guide of FIG. 7 viewed from a nacelle side.
[FIG. 9] Diagram showing still another embodiment of a wind turbine generating apparatus according to the present invention, in cross section showing a main part of a third embodiment of an air circulation guide.
[FIG. 10] Diagram of the air circulation guide of FIG. 9 viewed from a rotor head side.
[FIG. 11] Diagram showing further another embodiment of a wind turbine generating apparatus according to the present invention, in cross section showing a main part of a fourth embodiment of an air circulation guide.
[FIG. 12] Cross section of a main part of a modification of FIG. 11.
[FIG. 13] Cross section of a main part of a fifth embodiment of a wind turbine generating apparatus according to the present invention.
[FIG. 14] Cross section of a main part of a sixth embodiment of a wind turbine generating apparatus according to the present invention.
[FIG. 15] Cross section of a main part of a seventh embodiment of a wind turbine generating apparatus according to the present invention.
[FIG. 16] Cross section of a main part of an eighth embodiment of a wind turbine generating apparatus according to the present invention.
[FIG. 17] Cross section of a main part of a first modification of FIG. 16.
[FIG. 18] Cross section of a main part showing a modification of FIGS. 16 and 17.
[FIG. 19] Cross section of a main part showing a second modification of FIG. 16.
[FIG. 20] Diagram of the modification of FIG. 19 viewed from the front end side of the rotor head.
[FIG. 21] Cross section of a main part showing a conventional example.

### Explanation of Reference:

- 1:: wind turbine generating apparatus
- 2:: support
- 3:: nacelle
- 4:: rotor head
- 4a:: rotor head cover
- 5:: wind turbine blade
- 7:: hub
- 7a:: outflow hole
- 8:: internal device
- 9:: communication path
- 9a,: 9b: partition member
- 10:: gear box
- 11:: power generator
- 20, 20A:: air circulation guide (air flow forming means)
- 23:: flow path separating guide (air flow path forming means)
- 24:: opening
- 30:: stationary propeller (air flow forming means)
- 33:: plate-shaped member (air flow forming member)
- 40:: flow path in rotor shaft
- 50:: fan (air flow forming means)
- 60:: outside air introducing path
- 61:: louver
- 70:: heat transfer element for heat dissipation (heat dissipation means)
- 71,: 72: radiation fin

### Best Mode for Carrying Out the Invention

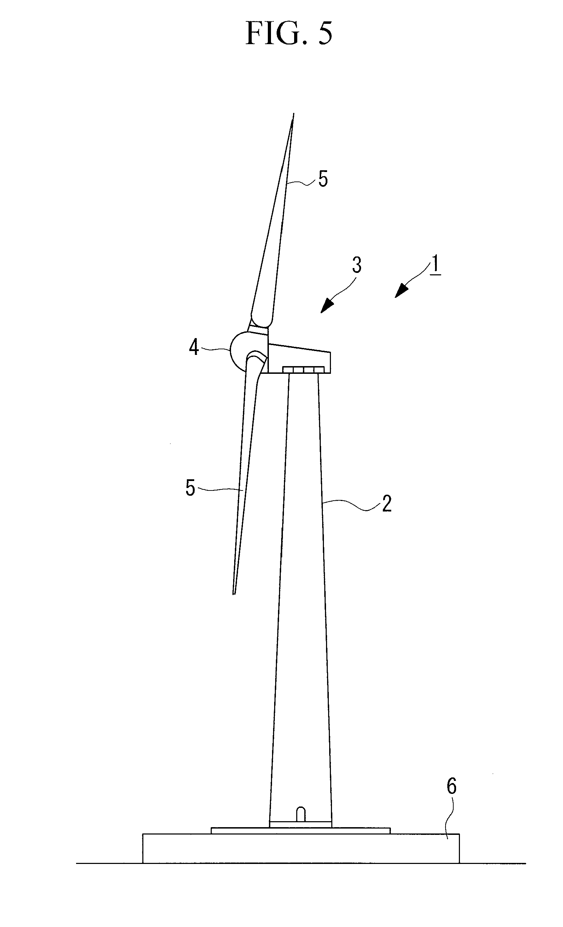

An embodiment of a wind turbine generating apparatus according to the present invention will be described below with reference to the drawings.
As shown in FIG. 5, a wind turbine generating apparatus 1 includes a support 2 provided upright on a foundation 6, a nacelle 3 provided on the upper end of the support 2, and a rotor head 4 provided to the nacelle 3 so as to be rotatable about an almost horizontal axis.
To the rotor head 4, a plurality of wind turbine blades 5 are radially attached about the rotational axis of the rotor head 4. As a result, a force of wind hitting the wind turbine blade 5 from the rotational axis direction of the rotor head 4 is converted to power for rotating the rotor head 4 about the rotational axis.

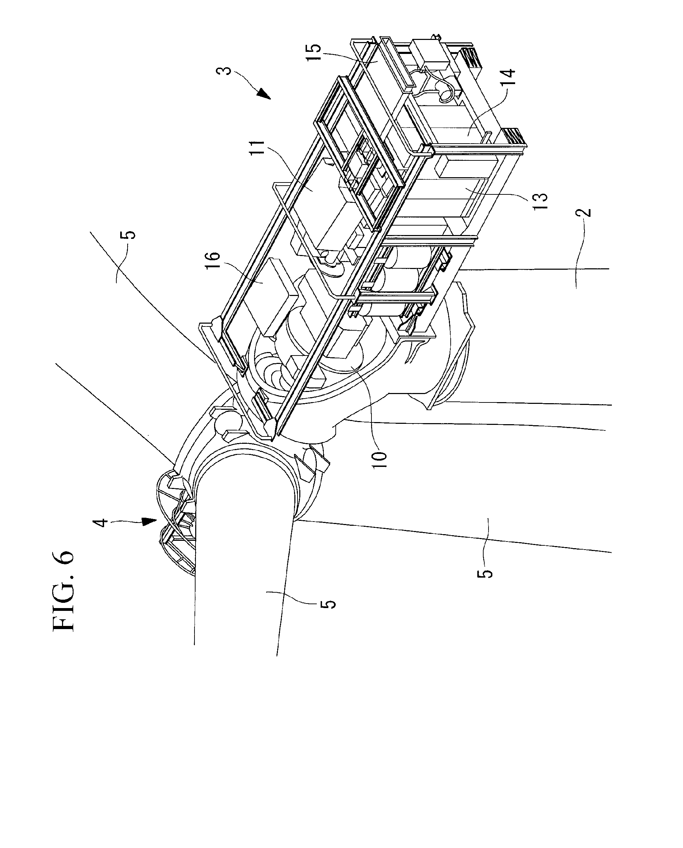

Housed in the nacelle 3 is, as shown in FIG. 6 or the like, a driving/generating mechanism having a power generator 11 coupled via a gear box 10 which is provided coaxially with the rotor head 4. Specifically, by increasing the speed of rotation of the rotor head 4 by the gear box 10 and driving the power generator 11, a power generator output W is obtained from the power generator 11. Also shown in FIG. 6 are a transformer 12, a controller 13, an inverter 14, an inverter cooler 15, and a lubricant oil cooler 16.

The temperature in the above described nacelle 3 is raised by heat generated by rotation of the gear box 10, the power generator 11, and the like as well as heat generated by the inverter 14 and the like. Thus, the inverter cooler 15 and the lubricant oil cooler 16 are disposed for cooling, and an intake/exhaust port (not shown) having a cooling fan for ventilating and cooling the inside is provided in an appropriate position in the nacelle 3. With this configuration, the internal air in the nacelle 3 is cooled and ventilated, so that the temperature in the nacelle 3 is relatively low.

In the rotor head 4, the wind turbine blades 5 are attached to the hub 7 that is coupled to the main shaft so as to be rotatable. The outer periphery of the hub 7 is covered with the rotor head cover 4a with a predetermined space provided therebetween.
In the hub 7, there are housed internal devices 8 such as hydraulic devices for controlling the pitch of the wind turbine blades 5, a control panel, and the like. Among them, the hydraulic devices such as a hydraulic pump are heat generating members. On the other hand, electric/electronic parts constructing the control devices such as the control panel are subject to restriction of temperature conditions in the install environment. Since invasion of rainwater or the like is not preferable for the internal devices 8, the hub 7 needs sealing property.

According to the present invention, in the wind turbine generating apparatus 1 in which a driving/generating mechanism such as the gear box 11 and the power generator 11 coupled to the rotor head 4 having the wind turbine blades 5 attached thereto is housed in the nacelle 3, and the control devices such as the control panel are housed in the hub 7 of the rotor head 4, air flow forming means is provided for making air circulate between the inside of the rotor head 4 and the inside of the nacelle 3 via a communication path 9 formed between the rotor head 4 and the nacelle 3.
In the above communication path 9, there is attached a partition member 9a such as a punching metal, a mesh member, or the like, for partitioning the spaces in the rotor head 4 and the nacelle 3 in a communication state where air circulates.

In the following, embodiments of the air flow forming means will be described using concrete configuration examples with reference to the drawings.

### First Embodiment

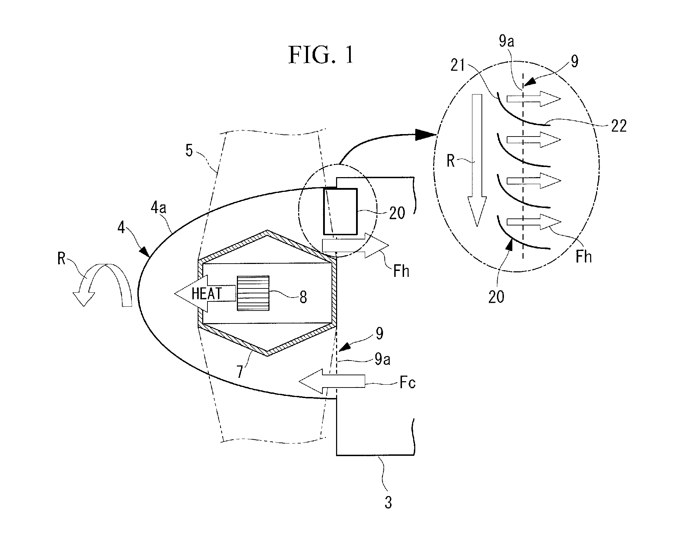

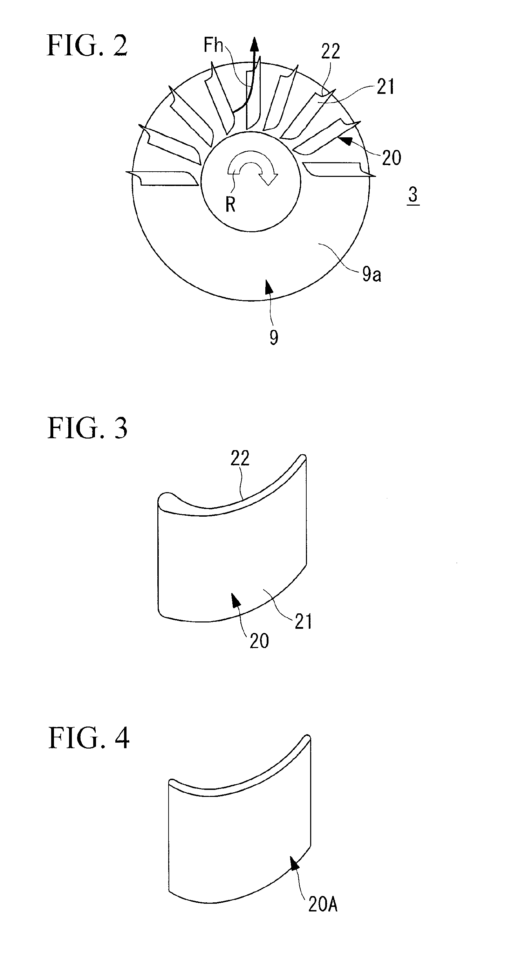

In a first embodiment shown in FIGS. 1 to 3, the air flow forming means for forming an air flow corresponds to an air circulation guide (hereinbelow, called "guide") 20 mounted in the communication path 9. The guide 20 is, for example, a blade-shaped member as shown in FIG. 3, and a plurality of guides 20 are disposed at equal pitches over an almost semiperimeter in the circumferential direction of the communication path 9 having a circular shape. In the configuration example shown in the drawings, the guides 20 are attached over the upper half of the semiperimeter (hereinbelow, called "upper region") of the communication path 9. However, the present invention is not limited to such a configuration. In the blade shape of the guide 20 shown in FIG. 3, reference 21 in the drawing denotes the back thereof, and 22 denotes the front thereof.

In the configuration shown in FIGS. 1 and 2, the plurality of guides 20 are attached to the nacelle 3 on the stationary side. That is, the partition member 9a mounted in the communication path 9 is fixed and supported by the nacelle 3 on the stationary side formed between the rotor head 4 and the nacelle 3. The above-described guides 20 are fixedly attached in the upper region of the partition member 9a.
FIG. 2 is a diagram of the guides 2 attached to the partition member 9a that is fixed to the nacelle 3, viewed from the rotor head 4 side. The guides 20 radially disposed in the rotation direction (see an arrow R) of the rotor head 4 are attached in the direction from the front 22 to the back 21 side of the blade shape. In other words, the rotor head 4 rotating in the rotation direction R passes the upper region in which the guides 4 are installed in order of the front 22, the back 21, the front 22, the back 21, ..., and the back 21.

By providing the air flow forming means constructed as described above, when the rotor head 4 rotates, air can be circulated between the inside of the rotor head 4 and the inside of the nacelle 3 via the communication path 9 formed between the rotor head 4 and the nacelle 3. That is, when the guide 20 performs relative rotational motion without requiring any dedicated power, it is possible to increase the amount of air circulating via the communication path 9 formed between the rotor head 4 on the rotary side and the nacelle 3 on the stationary side.
As a result, to the inside of the rotor head 4, air of a relatively low temperature is introduced from the nacelle 3 having the cooling structure of cooling and ventilation. When this air circulates in the rotor head 4, the internal temperatures of the rotor head 4 and the hub 7 are lowered.

The above-described air circulation will be described concretely below.
When the wind turbine generating apparatus 1 receives wind on the wind turbine blades 5, the rotor head 4 is rotated in the direction of the arrow R. Thus, the guide 20 fixed to the nacelle 3 side on the stationary side enters a state similar to a state of rotating relatively to the rotor head 4. In the upper region where the guides 20 are provided, a flow of air (refer to an arrow Fh in the drawing) from the inside of the rotor head 4 toward the nacelle 3 is formed along the blade shape of the guide 20. The air flow Fh sucks air of a relatively high temperature increased by heating of the internal device 8 and transmits the sucked air toward the nacelle 3.

When the air flow Fh is formed, the internal pressure of the rotor head 4 decreases, so that the internal pressure of the nacelle 3 becomes relatively high. As a result, the flow of air (refer to an arrow Fc in the drawing) of a relatively low temperature from the nacelle 3 of the high internal pressure into the rotor head 4 is formed in the lower region of the communication path 9. Therefore, when the rotation of the rotor head 4 continues, air of a relatively high temperature flows out from the rotor head 4 due to the air flow Fh passing through the upper region in the communication path 9 and the air flow Fc passing through the lower region in the communication path 9, and there is formed an air circulating flow by which the air of a relatively low temperature flows in from the nacelle 3. The circulating flow is provided by the rotation of the rotor head 4 and the function of the guides 20, so that there is no need to provide an additional drive source for forming a circulating flow.

When the circulating flow of air is formed, between the inside of the nacelle 3 and the rotor head 4, the amount of air flowing through the communication path 9 increases. As a result, the internal temperature of the rotor head 4 decreases, and the amount of heat released from the surface of the hub 7, which is generated by the internal device 8, can be increased. Therefore, heat is prevented from staying in the sealed hub 7, rise of the internal temperature is suppressed, and temperature control necessary to maintain the performances of the electric and electronic parts can be performed.
Although the air flow forming means is provided as the guide 20 having the blade shape in the foregoing embodiment, the means may be a blade-shaped curved plate 20A obtained by making a thin plate curved in an almost blade shape, or a guide having a thin plate shape (flat plate) which may be simply disposed so as to be tilted with respect to the air flow.

### Second Embodiment

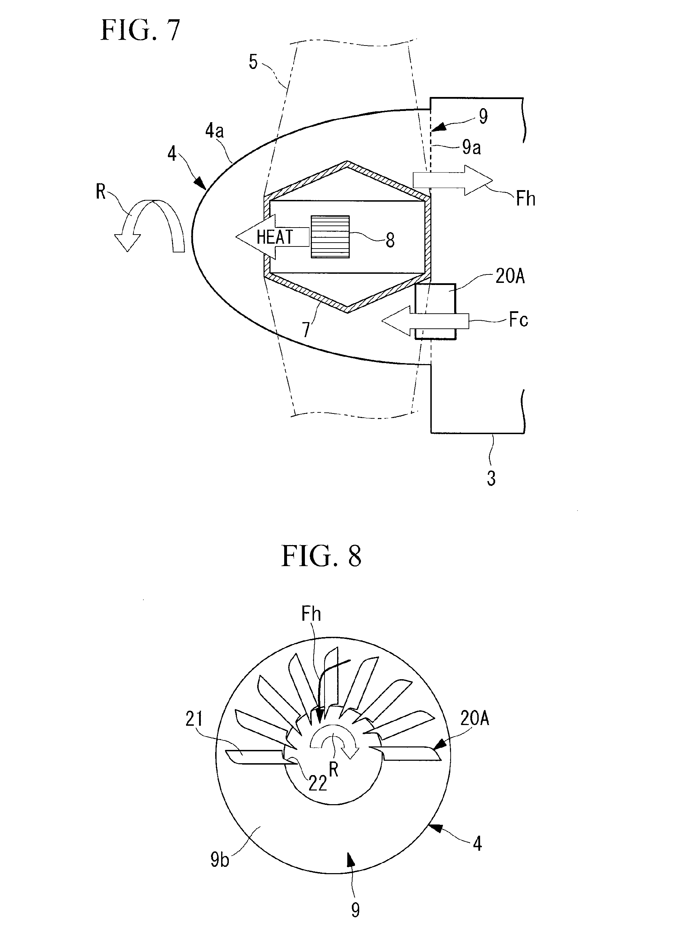

Subsequently, a second embodiment of the present invention will be described with reference to FIGS. 7 and 8. The same references are designated to parts similar to those of the foregoing embodiment and detailed description thereof will not be given.
In this embodiment, a partition member 9b such as a punching metal for partitioning the communication port 9 is attached to the rotor head 4 side. An air circulation guide (hereinbelow, called "rotation guide") 20A is attached to the communication path 9 as air flow forming means for forming an air flow. As the rotation guide 20A, for example, a blade-shaped member shown in FIG. 3 or a blade-shaped curved plate shown in FIG. 4 is employed. A plurality of rotation guides 20A are disposed at equal pitches over almost a semiperimeter in the circumferential direction of the circular-shaped communication path 9. In the blade shape of the rotation guide 20 illustrated in FIG. 3, reference 21 in the diagram denotes the back thereof, and 22 denotes the front thereof.

FIG. 8 is a diagram of the rotation guides 20A attached to the partition member 9b fixed to the rotor head 4, viewed from the nacelle 3 side. In this case, when the rotor head 4 rotates in the rotation direction shown by the arrow R, the rotation guides 20A radially disposed pass through a predetermined position in the nacelle 3 on the stationary side in order of the front 22, the back 21, the front 22, ..., and the back 21 of the blade shape.
By providing the air flow forming means constructed as described above, when the rotor head 4 rotates, air can be circulated between the inside of the rotor head 4 and the inside of the nacelle 3 via the communication path 9 formed between the rotor head 4 and the nacelle 3 without requiring any dedicated power. That is, by rotation of the guides 20A integrally with the rotor head 4, the amount of air circulating via the communication path 9 formed between the rotor head 4 on the rotary side and the nacelle 3 on the stationary side can be increased.
As a result, to the inside of the rotor head 4, air of a relatively low temperature is introduced from the inside of the nacelle 3 having the cooling structure of cooling and ventilation. When this air circulates in the rotor head 4, the internal temperatures of the rotor head 4 and the hub 7 are lowered.

The above-described air circulation will be described concretely below.
When the rotor head 4 rotates in the direction of the arrow R, the rotation guides 20A rotate integrally with the rotor head 4. Consequently, in the region where the rotation guides 20A are provided, a flow of air (refer to the arrow Fh in the drawing) from the inside of the rotor head 4 toward the nacelle 3 is formed along the blade shape of the rotation guide 20A. The air flow Fh sucks air of a relatively high temperature increased by heating of the internal device 8 and transmits the sucked air toward the nacelle 3.

When the air flow Fh is formed, the internal pressure of the rotor head 4 decreases, so that the internal pressure of the nacelle 3 becomes relatively high. As a result, a flow of air (refer to the arrow Fc in the drawing) of a relatively low temperature from the nacelle 3 of the high internal pressure into the rotor head 4 is formed in the region in the communication path 9 in which no rotation guide 20A is provided. Therefore, when the rotation of the rotor head 4 continues, a circulating flow of air is formed in the rotor head 4 and the nacelle 3 by the air flow Fh of a relatively high temperature and the air flow Fc of a relatively low temperature. Since the circulating flow is formed by the rotation of the rotor head 4 and the function of the guides 20, it is unnecessary to provide an additional drive source for forming a circulating flow.
By this circulating flow, the amount of air flowing through the communication path 9 increases between the inside of the nacelle 3 and the rotor head 4. Therefore, the internal temperature of the rotor head 4 decreases, and the amount of heat released from the surface of the hub 7, which is generated by the internal device 8, can be increased.

### Third Embodiment

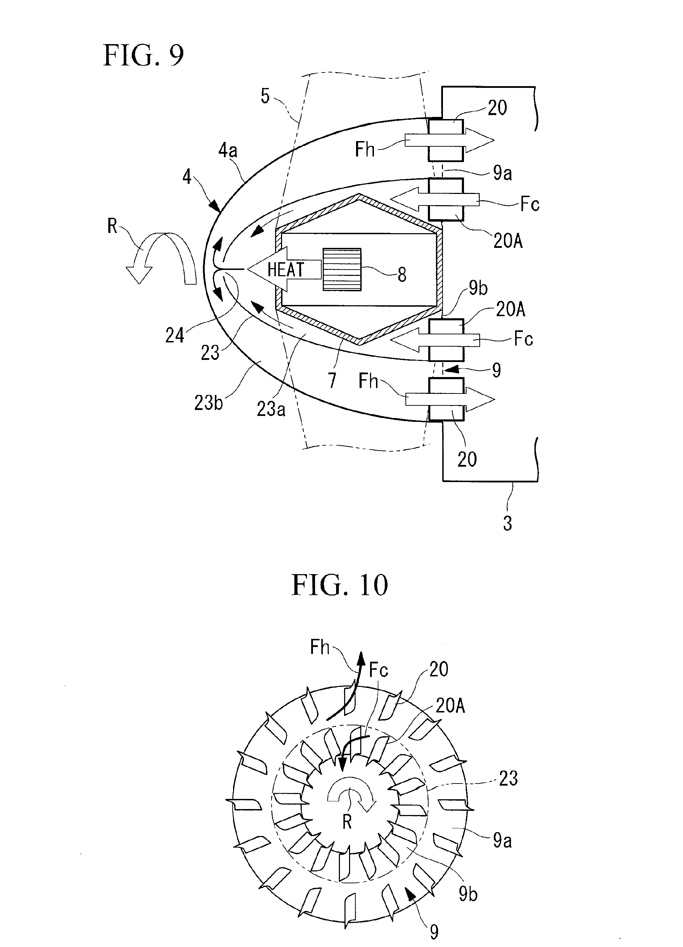

Subsequently, a third embodiment of the present invention will be described with reference to FIGS. 9 and 10. The same references are designated to parts similar to those of the foregoing embodiments and detailed description thereof will not be given.
In this embodiment, partition members 9a and 9b such as punching metals each for partitioning the communication port 9 are attached to both of the nacelle 3 and the rotor head 4 so as to partition the space, for example, in the radial direction. In the example shown in the drawing, the partition members 9a are attached in almost a half of the outer periphery on the nacelle 3 side of the communication path 9, and the partition members 9b are attached in almost a half of the inner periphery of the rotor head 4.

The air flow forming means in this case employs a combination of the guides 20 described in the first embodiment and the rotation guides 20A described in the second embodiment. Specifically, the guides 20 fixed to the nacelle 3 side as the outer-periphery-side air circulation guides are attached to the outer periphery of the communication path 9, and the rotation guides 20A rotating integrally with the rotor head 4 as the inner-periphery-side air circulation guides are attached to the inner periphery of the communication path 9. The guides 20 and the rotation guides 20A in this case are disposed at equal pitches over the entire circumference of the communication path 9. The rotation direction R of the rotor head 4 and the blade attaching direction (arrangement of the backs 21 and the fronts 22) are similar to those of the foregoing embodiments.

In this embodiment, as the air flow forming member for dividing the communication path 9 into the inner-peripheral side and the outer-peripheral side as well as dividing the internal space of the rotor head 4 into the hub outer peripheral side and the rotor head inner wall face side, a cone-shaped flow path separating guide 23 is attached inside the rotor head 4. The flow path separating guide 23 has a cone shape extending toward the front end of the rotor head 4 so as to be distant from the nacelle 3 from the start point of the position in the communication path 9 where the partition members 9a and 9b are switch from each other.

In an internal space 23a of the flow path separation guide 23, that is, in the space formed on the outer peripheral side of the hub, the hub 7 is housed, thereby forming an air flow path (internal flow path) between the inner wall face of the flow path separation guide 23 and the outer wall face of the hub 7. In an outer space 23b of the flow path separation guide 23, that is, in the space formed on the inner wall face side of the rotor head, another air flow path (external flow path) is formed between the guide and the rotor head cover 4a.
Further, the flow path separation guide 23 has, for example, an opening 24 formed at the front end to allow the inner space 23a and the outer space 23b to communicate with each other, that is, to allow the inner flow path on the hub outer peripheral side and the outer flow path on the rotor head inner wall face side to be communicate with each other.

With such a configuration, the air in the nacelle 3 can be introduced into the internal space 23a of the flow path separating guide 23a and circulated. At this time, in the communication path 9 formed between the rotor head 4 on the rotary side and the nacelle 3 on the stationary side, the guides 20 and the rotation guides 20A perform relative rotational motion without requiring any dedicated power, thereby increasing the circulation amount of air. Therefore, the air in the nacelle 3 of a relatively low temperature is first introduced in the internal space 23a and circulated, then flows out from the opening 24 to the outer space 23b to return to the nacelle 3 side. Particularly, each rotation guide 20A forms the flow in the direction of pushing the air in the nacelle 3 into the rotor head 4, and each guide 20 forms the flow in the direction of sucking the air in the rotor head 4 into the nacelle 3, so that the circulating flow of air can be formed efficiently by cooperation of the guides 20 and 20A.

In the description of the foregoing embodiments, the air of a low temperature first passes through the internal space 23a so that the inside of the hub 7 can be cooled efficiently. Concretely, the guides 20 are disposed on the outer peripheral side of the communication path 9, and the rotation guides 20A are disposed on the inner peripheral side thereof. To achieve the object of forming a circulation flow of air, the guides 20 and the rotation guides 20A may be arranged in opposite positions.
The opening 24 is disposed so that air of a low temperature reliably passes through the entire internal space 23a. The position and the number of openings 24 disposed are also not specifically limited.

### Fourth Embodiment

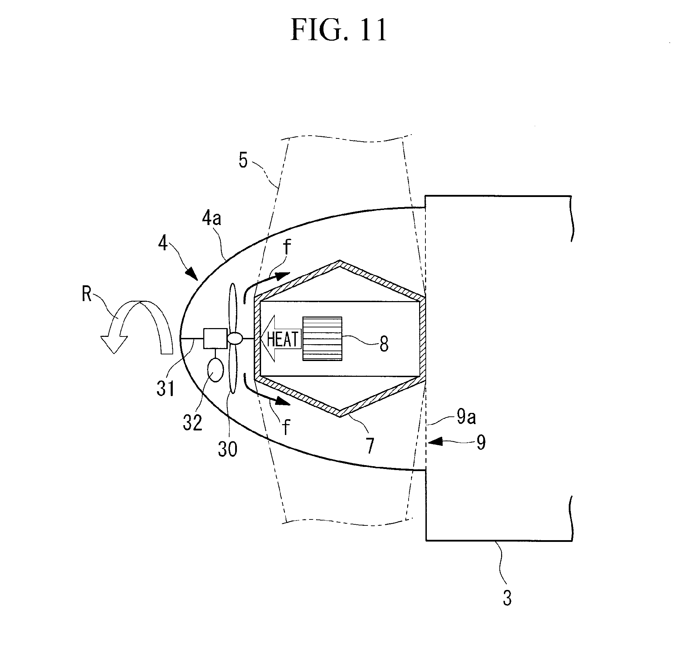

Subsequently, a fourth embodiment of the present invention will be described with reference to FIG. 11. The same references are designated to parts similar to those of the foregoing embodiments and detailed description thereof will not be given.
In this embodiment, an air flow accelerating member mounted so as to be stationary in a predetermined position in the rotor head 4 is employed as the air flow forming means.
In the following, as a concrete configuration example of an air flow lower member, a stationary propeller 30 will be described.

The stationary propeller 30 shown in FIG. 11 is attached so as to be stationary in the rotating rotor head 4. The stationary propeller 30 is swingably axially supported together with a weight 32 to a shaft 31 attached so as to couple the hub 7 and the rotor head cover 4a. Therefore, even when the rotor head 4 rotates together with the hub 7, the stationary propeller 30 provided integrally with the weight 32 is almost stationary in a predetermined position without rotating. That is, a state where the weight 32 hangs below the shaft 31 is maintained, so that the stationary propeller 30 is held in the same position as that in the stationary state by the weight 32.

When the stationary propeller 30 is stationary in the predetermined position in a state where the rotor head 4 is rotating, it is seen from the rotating rotor head 4 side that the resting stationary propeller 30 rotates relatively without any requiring power. Consequently, in the rotor head 4, a circulation flow "f" of air is formed by the stationary propeller 30. This circulation flow increases the amount of air flowing through the communication path 9 between the inside of the nacelle 3 and the rotor head 4, so that the internal temperature of the rotor head 4 is decreased, and the amount of heat released from the surface of the hub 7, which is generated by the internal device 8, can be increased.

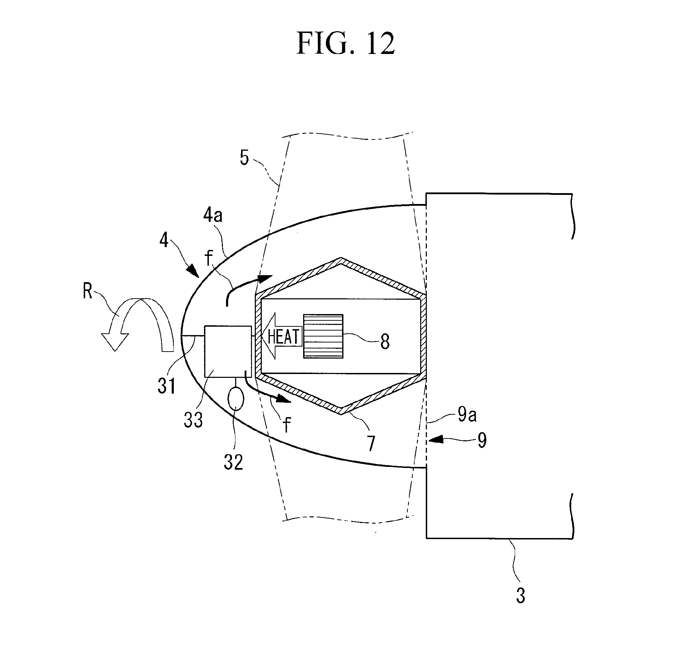

The air flow forming means according to the present embodiment is not limited to the above-described stationary propeller 30. For example, like a modification shown in FIG. 12, a plate-shaped member 33 provided integrally with the weight 31 may be employed in place of the stationary propeller 30. When seen from the rotating rotor head 4, the stationary plate-shaped member 33 also rotates relatively without requiring any power. Consequently, in the rotor head 4, similarly to the case with the stationary propeller 30, the air circulation flow is formed by the plate-shaped member 33.

### Fifth Embodiment

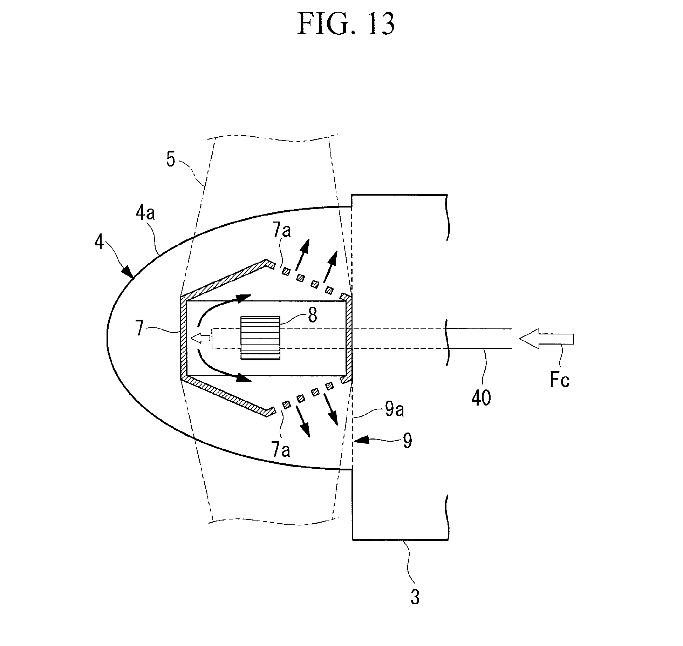

Subsequently, a fifth embodiment of the present invention will be described with reference to FIG. 13. The same references are designated to parts similar to those of the foregoing embodiments and detailed description thereof will not be given.
In this embodiment, air flow forming means is employed, which has a flow path 40 in a rotor shaft for allowing the inside of the nacelle 3 and the inside of the hub 7 to communicate with each other, a fan (not shown) of air blowing means provided in the nacelle 3, and outflow holes 7a opened in the hub 7. The air flow forming means circulates the air in the nacelle 3 by introducing the air in the nacelle 3 into the hub 7, making the air outflow from the outflow holes 7a, and returning the air into the nacelle 3 via the communication path 9. As the fan in this case, a dedicated fan may be additionally provided or a fan for ventilation/cooling in the nacelle 3 may be used.

With such a configuration, the air in the nacelle 3 of a relatively low temperature can be reliably introduced into the hub 7 via the flow path 40 in the rotor shaft and flow out of the outflow holes 7a. Thus, the inside of the hub 7 can be reliably ventilated and cooled. Further, since the air flows out of the outflow holes 7a, invasion of droplets or the like into the hub 7 is prevented and a state where air is almost sealed can be provided.

### Sixth Embodiment

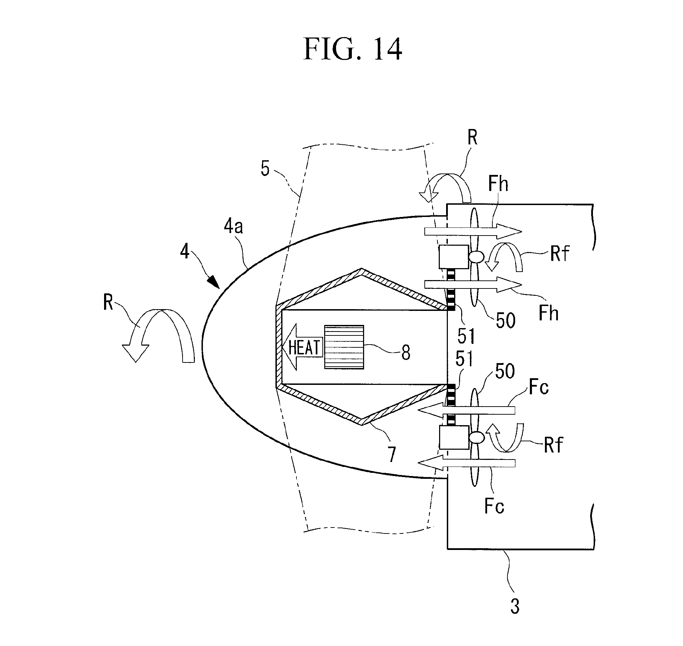

Subsequently, a sixth embodiment of the present invention will be described with reference to FIG. 14. The same references are designated to parts similar to those of the foregoing embodiments and detailed description thereof will not be given.
In the sixth embodiment, a fan 50 mounted in the communication path 9 and operating due to rotation on the rotor head 4 side as a drive force is employed as the air flow forming means. Specifically, the fan 50 driven via a gear 51 which engages with the rotating hub 7 or the main shaft (not shown) is mounted in an appropriate position in the communication path 9, and the fan 50 is mechanically operated even with no drive source such as an electric motor, thereby capable of forming the circulation flow of air.

A plurality of fans 50 described above may be mounted, for example, as shown in FIG. 14, so that one of the fans 50 forms the air flow Fc which pushes air of a relatively low temperature in the nacelle 3 into the rotor head 4, and another of the fans 50 forms the air flow Fh which sucks air of a relatively high temperature in the rotor head 4 into the nacelle 3. Alternately, the fan 50 for forming one of the air flow Fc and the air flow Fh may be mounted. The above-described mounting of the fan 50 has a circulation flow forming function substantially similar to that of the guides 20 and the rotation guides 20A described in the first embodiment and the second embodiment.

### Seventh Embodiment

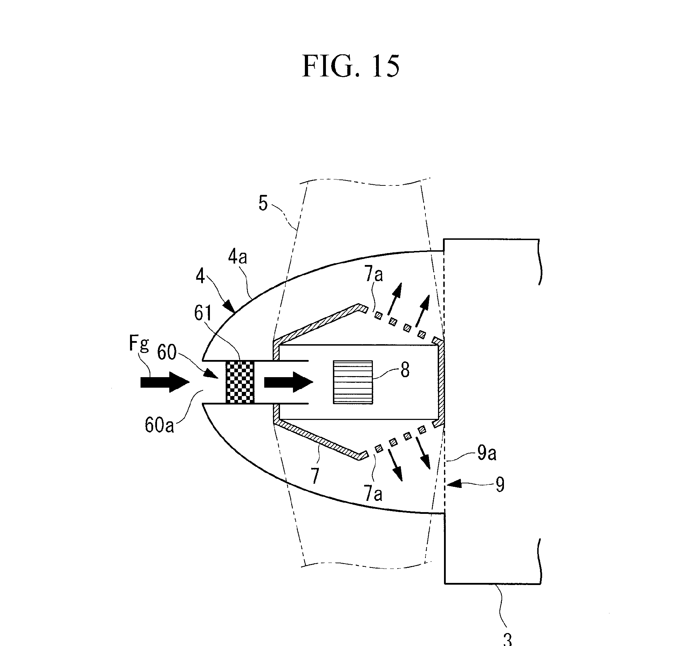

Subsequently, a seventh embodiment of the present invention will be described with reference to FIG. 15. The same references are designated to parts similar to those of the foregoing embodiments and detailed description thereof will not be given.
In this embodiment, in the wind turbine generating apparatus 1 in which the driving/generating mechanism coupled to the rotor head 4 having the wind turbine blades 5 attached thereto is housed in the nacelle 3, and the control devices are housed in the hub 7 of the rotor head 4, the outside of the rotor head 4 and the inside of the hub 7 are communicated with each other via an outside air introducing path 60, and a louver 61 is mounted in an appropriate place in the outside air introducing path 60.

To make the outside air introduced into the hub 7 from an inlet 60a of the outside air introducing path 60 outflow to the inside of the rotor head 4, outflow holes 7a are opened in the hub 7.
Therefore, the flow of the outside air (an arrow Fg in the drawing) introduced from the inlet 60a of the outside air introducing path 60 passes through the louver 61 and flows into the hub 7. By passing through the louver 61, invasion of droplets such as rainwater can be prevented. The outside airflow Fg flowing into the hub 7 ventilates and cools the inside of the hub 7, and also cools the internal device 8.
The flow Fg of the outside air of which temperature is raised passes through the outflow hole 7a and flows into the rotor head 4. After that, the outside air flow Fg outflows to the inside of the nacelle 3 via the communication path 9 formed between the rotor head 4 and the nacelle 3.

As a result, there is formed the outside air circulating path for allowing the outside air flow from the inlet 60a of the outside air introducing path 60 to pass through the louver 61, the inside of the hub 7, the outflow hole 7a, and the inside of the rotor head 4, so as to outflow to the inside of the nacelle 3 via the communication path 9. The flow Fg of the outside air outflowing to the inside of the nacelle 3 flows to the outside from the outlet for ventilation of the nacelle 3.
As described above, provided are the outside air introducing path 60 for allowing the outside of the rotor head 4 and the inside of the hub 7 to communicate with each other and having the louver 61, and the outside air circulating path through which the outside air introduced from the inlet 60a in the outside air introducing path 60 to the inside of the hub 7 flows to the outside via the outflow holes 7a opened in the hub 7 and the communication path 9 formed between the rotor head 4 and the nacelle 7. Therefore, the inside of the hub 7 is cooled reliably by the outside air of a low temperature, and invasion of droplets or the like is prevented by the louver 61, resulting in a state where air is almost sealed.

### Eighth Embodiment

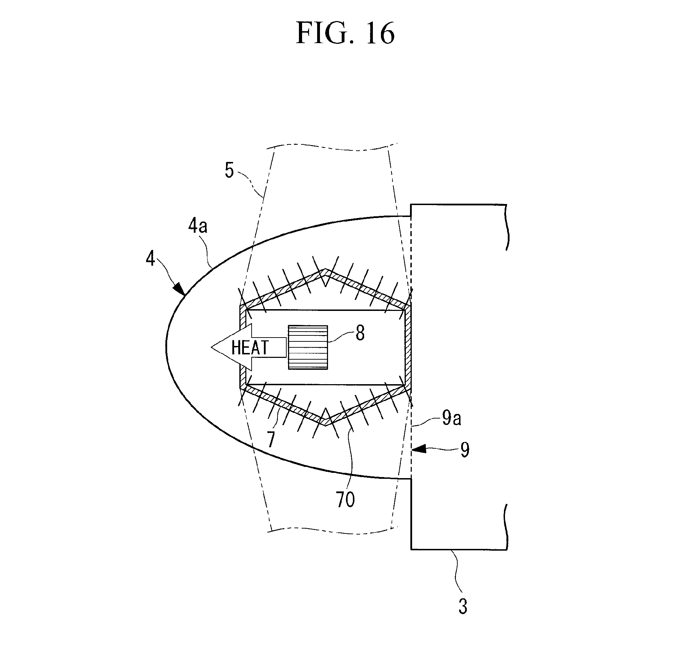

Subsequently, an eighth embodiment of the present invention will be described with reference to FIGS. 16 to 19. The same references are designated to parts similar to those of the foregoing embodiments and detailed description thereof will not be given.
In this embodiment, in the wind turbine generating apparatus 1 in which the driving/generating mechanism coupled to the rotor head 4 to which the wind turbine blades 5 are attached is housed in the nacelle 3, and the control devices are housed in the hub 7 of the rotor head 4, at least one of the rotor head 4 and the hub 7 is provided with heat releasing means.

In the embodiment shown in FIG. 16, there are attached heat transfer elements 70 for heat dissipation, which each release heat of the inside to the outside by, for example, the Peltier effect so as to penetrate the hub 7 mounted inside the rotor head 4. That is, the heat transfer elements 70 for heat dissipation attached so as to penetrate the wall face of the hub 7 release heat released from the internal device 8 from the inside of the hub 7 to the outside by the Peltier effect, so that temperature rise can be prevented or suppressed by increasing the amount of heat transfer from the inside of the hub 7 to the outside thereof. At this time, when penetration parts in the heat transfer elements 70 are processed water-tightly, the air tightness inside the hub 7 does not deteriorate.

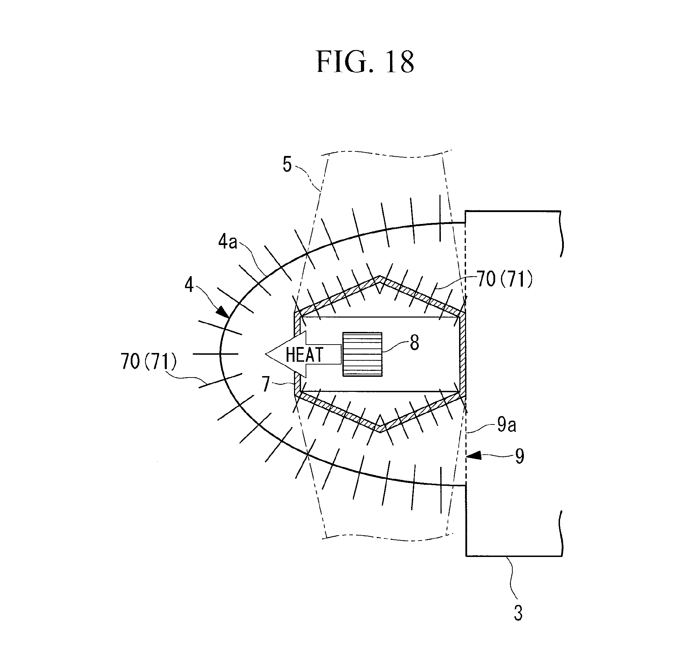

The heat transfer elements 70 for heat dissipation employed in this embodiment may release heat to the outside by being attached not only so as to penetrate the hub 7 but also so as to penetrate the rotor head cover 4a of the rotor head 4. By attaching such heat transfer elements 70 for heat dissipation to both of the hub 7 and the rotor head cover 4a as shown in, for example, FIG. 18, temperature rise in the hub 7 can be efficiently and reliably prevented or suppressed.
Further, the heat transfer elements 70 for heat dissipation can be also employed in combination with any of the foregoing embodiments.

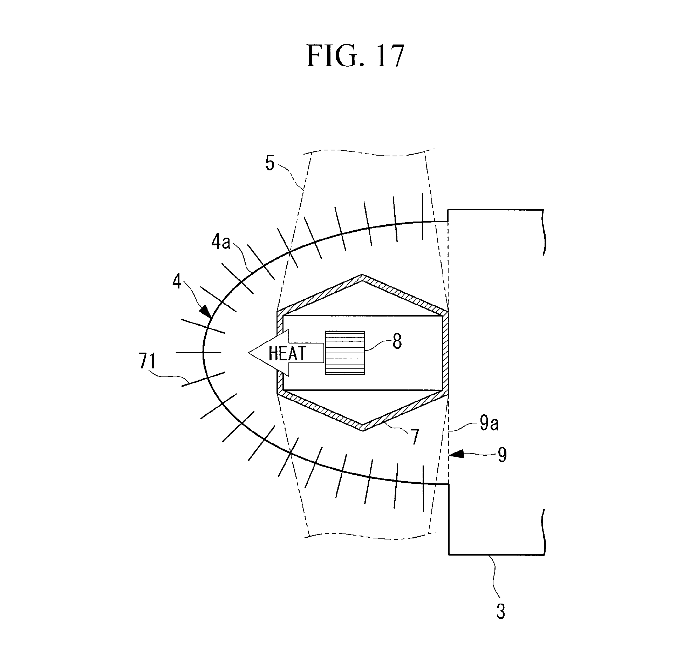

In a first modification shown in FIG. 17, a radiation fin 71 for increasing the heat transfer area is attached in place of the heat transfer element 70 for heat dissipation. In the example shown in the drawing, the heat radiation fins 71 are attached so as to penetrate the rotor head cover 4a. Alternatively, the heat radiation fins 71 may be attached so as to penetrate only the hub 7 or may be attached to both of the hub 7 and the rotor head cover 4a (refer to FIG. 18). In this case as well, by processing the penetration parts of the heat radiation fins 710 water-tightly, air tightness in the hub 7 and the rotor head 4 does not deteriorate.
The first modification can be also employed in combination with any of the foregoing embodiments as in the above-described heat transfer elements 70 for heat dissipation.

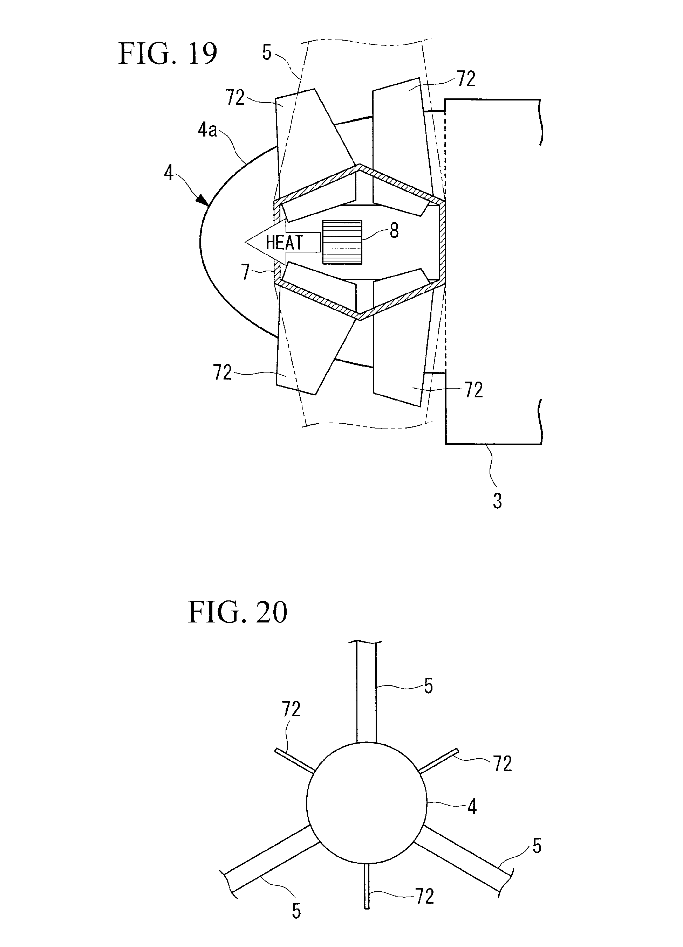

In a second modification shown in FIGS. 19 and 20, radiation fins 72 continuously penetrating the inside of the hub 7 and the outside of the rotor head 4 are employed. Since the radiation fins 72 penetrate from the inside of the hub 7 to the outside of the rotor head 4 where being in contact with the outside air, heat can be directly released from the inside of the hub 7 to the outside air of a low temperature. Preferably, such radiation fins 72 project between neighboring wind turbine blades 5 as shown in, for example, FIG. 20.
Also in the second modification, similarly to the heat transfer elements 70 for heat dissipation and the radiation fins 71, a combination of the second modification with any of the foregoing embodiments can be also employed.

Since at least one of the rotor head 4 and the hub 7 is provided with the heat dissipation means such as the heat transfer element 70 for heat dissipation or the radiation fins 71 or 72 as described above, the heat transfer amount between the insides and outsides of the rotor head 4 and the hub 7 can be increased without deteriorating air tightness thereof . By adding and combining such heat dissipation means to any of the foregoing embodiments, rise of the internal temperatures of the rotor head 4 and the hub 7 is prevented, the rotor head 4 and the hub 7 can be cooled more efficiently to control the temperature.

Therefore, according to the present invention, by introducing air of a relatively low temperature from the inside of the nacelle 3 or introducing outside air directly to the inside of the rotor head 4 and circulating the introduced outside air, temperature control is performed by cooling the inside of the rotor head, the operation environment of the control devices inclusive of the electric/electronic parts is maintained, and reliability and durability of the wind turbine power generating apparatus can be improved. Further, by providing at least one of the rotor head 4 and the hub 7 with the heat dissipating means to increase the heat transfer amount, temperature control by cooling the inside of the rotor head is performed, the operation environment of the control devices is maintained, so that reliability and durability of the wind turbine power generating apparatus can be improved.
The present invention is not limited to the foregoing embodiments but can be appropriately modified without departing from the gist thereof.

## Claims

1. A wind turbine generating apparatus in which a driving/generating mechanism coupled to a rotor head having wind turbine blades attached thereto is housed in a nacelle, and control devices are housed in a hub of the rotor head, the apparatus comprising
an air flow forming means for allowing air to circulate between an inside of the rotor head and an inside of the nacelle via a communication path formed between the rotor head and the nacelle.

2. The wind turbine generating apparatus according to claim 1, wherein the air flow forming means is provided as an air circulation guide mounted in the communication path.

3. The wind turbine generating apparatus according to claim 2, wherein two or more of the air circulation guides are attached over a semiperimeter in a circumferential direction of the communication path so as to be fixed on the nacelle side.

4. The wind turbine generating apparatus according to claim 2, wherein two or more of the air circulation guides are attached in a semiperimeter over a circumferential direction of the communication path so as to be fixed on the rotor head side.

5. The wind turbine generating apparatus according to claim 1, wherein the air flow forming means includes:
an air flow path forming member attached to the inside of the rotor head, separating the communication path to an inner peripheral side and an outer peripheral side, separating an internal space of the rotor head to a hub outer peripheral face side and a rotor head inner wall face side, and having an opening for allowing the hub outer peripheral face side and the rotor head inner wall face side to communicate with each other;
inner-peripheral-side air circulation guides fixed to the rotor head side and arranged over an entire circumference along the inner peripheral side of the communication path; and
outer-peripheral-side air circulation guides fixed to the nacelle side and arranged over an entire circumference along the outer peripheral side of the communication path, wherein
air in the nacelle is introduced into the air flow path forming member and circulated therein.

6. The wind turbine generating apparatus according to claim 1, wherein the air flow forming means is provided as an air flow accelerating member disposed so as to be stationary in a predetermined position in the rotor head.

7. The wind turbine generating apparatus according to claim 1, wherein the air flow forming means includes a flow path in a rotor shaft, for allowing the inside of the nacelle and the inside of the hub to communicate with each other, an air blowing means provided in the nacelle, and an outflow hole opened in the hub, and
air in the nacelle is circulated by being introduced into the hub to outflow from the outflow hole, and then being returned into the nacelle via the communication path.

8. The wind turbine generating apparatus according to claim 1, wherein the air flow forming means is provided as a fan mounted in the communication path, for operating using rotation on the rotor head side as a driving force.

9. A wind turbine generating apparatus in which a driving/generating mechanism coupled to a rotor head having wind turbine blades attached thereto is housed in a nacelle, and control devices are housed in a hub of the rotor head, the apparatus comprising:
an outside air introducing path allowing an outside of the rotor head and an inside of the hub to communicate with each other and having a louver; and
an outside air circulating path where outside air, which is introduced from an inlet of the outside air introducing path into the hub, passes through an outflow hole opened in the hub and a communication path formed between the rotor head and the nacelle, so as to flow to the outside.

10. A wind turbine generating apparatus in which a driving/generating mechanism coupled to a rotor head having wind turbine blades attached thereto is housed in a nacelle, and control devices are housed in a hub of the rotor head, the apparatus comprising
a heat dissipating means provided to at least one of the rotor head and the hub.
